(19) Europäisches Patentamt

European Patent Office

Office européen des brevets

(11) **EP 1 576 890 A1**

(12) **EUROPEAN PATENT APPLICATION**
published in accordance with Art. 158(3) EPC

(43) Date of publication:
**21.09.2005 Bulletin 2005/38**

(51) Int Cl.⁷: **A23L 1/22**

(21) Application number: **03777178.9**

(86) International application number:
**PCT/JP2003/015433**

(22) Date of filing: **02.12.2003**

(87) International publication number:
**WO 2004/054385 (01.07.2004 Gazette 2004/27)**

(84) Designated Contracting States:
**AT BE BG CH CY CZ DE DK EE ES FI FR GB GR HU IE IT LI LU MC NL PT RO SE SI SK TR**

(30) Priority: **18.12.2002 JP 2002366594**
**27.05.2003 JP 2003149558**

(71) Applicant: **KABUSHIKI KAISHA UENO SEIYAKU OYO KENKYUSHO**
**Osaka 541-8543 (JP)**

(72) Inventors:
• **UENO, Ryuzo**
**Nishinomiya-shi, Hyogo 662-0038 (JP)**

• **HONDA, Junya, 502, Nishinomiyanajio-Nishinomiya-shi, Hyogo 669-1133 (JP)**
• **KASHIWAGI, Satoshi**
**Amagasaki-shi, Hyogo 661-0031 (JP)**
• **MASUDA, Takashi**
**Ushiku-shi, Ibaraki 300-1216 (JP)**

(74) Representative: **Cresswell, Thomas Anthony**
**J.A. KEMP & CO.**
**14 South Square**
**Gray's Inn**
**London WC1R 5JJ (GB)**

(54) **FOOD CONTAINING SWEETENER MIXTURE**

(57)    A food having excellent physical properties, flavor and sweet taste.
The food contains a sweetener mixture of a sugar alcohol such as maltitol and cane sugar.

**Description**

Background of the Invention

Field of the Invention

The present invention relates to a food having excellent physical properties, flavor and sweet taste.

Description of the Prior Art

Cane sugar is a disaccharide that is the most commonly used in foods, and its sweet taste is not unusual but mild and nonstimulative. However, the development of the sweet taste is slow and it remains for a long time. Additionally, it is high in calories, cariogenicity and colored by a Maillard reaction, so there is now seen a tendency toward the avoidance of its use by consumers.

Meanwhile, a sugar alcohol is a polyhydric alcohol obtained by reducing the carbonyl group of sugar and does not involve the above problems of cane sugar. That is, it is low in calories and low cariogenicity and does not cause a Maillard reaction. As the above sugar alcohol are known maltitol, sorbitol, hydrogenated isomaltulose, erythritol, lactitol and xylitol all of which have been widely used in various fields. However, when these sugar alcohols are used in the field of foods, various problems arise.

For example, maltitol is a disaccharide which has a sweet taste the most similar to cane sugar among the above sugar alcohols and is characterized by a refreshing sweet taste without an aftertaste because the development of its sweetness is faster than that of cane sugar and disappears quickly. Therefore, it is used in many kinds of foods, mainly drinks. However, as maltitol has slightly lower sweetness than cane sugar, it tends to provide an unsatisfactory sweet taste and inhibit the fermentation of a food, thereby causing various problems, for example, the food does not become large enough in volume, has reduced viscosity and no baked color, and causes laxative effect (diarrhea).

Summary of the Invention

It is an object of the present invention to provide a food having excellent physical properties, flavor and sweet taste by containing a sweetener mixture of a sugar alcohol and cane sugar preferably in a predetermined ratio in the food.

The inventors of the present invention have conducted intensive studies and have found that when a sweetener mixture of a sugar alcohol and cane sugar is contained in a food, the flavor and sweet taste of the food are improved while the sweetness of cane sugar is maintained and the flavor of a food ingredient is retained. The present invention has been accomplished based on this finding.

That is, the present invention relates to a sweetener mixture-containing food which comprises a sweetener mixture of a sugar alcohol and cane sugar.

Detailed Description of the Preferred Embodiment

The sugar alcohol which can be used in the present invention is a conventionally known sugar alcohol such as maltitol, sorbitol, hydrogenated isomaltulose, erythritol, lactitol or xylitol. They may be used in combination of two or more to obtain a sweet taste desired by a user. Out of these, maltitol and hydrogenated isomaltulose are preferably used because their effect of improving the flavor and sweet taste of a food is remarkable. Maltitol is more preferred because it has a sweet taste similar to cane sugar. Any sugar alcohol available on the market may be used without a problem if its purity is not extremely low. For example, when maltitol is used, a maltitol product having a purity of 85 to 95 % which is distributed in large quantities is easy to obtain but a product having a purity of 95 % or more may also be used. The form of the sugar alcohol is preferably powdery or granular from the viewpoint of handling ease. The particle diameter of the sugar alcohol powder or granule which differs according to the type of the sugar alcohol and application purpose is preferably about 0.2 to 1.2 mm because a problem such as segregation does not occur. Any maltitol may be used if it is powdery. It is recommended to use maltitol having a loose apparent specific gravity of a particle having a particle diameter of 20 to 50 mesh after grinding and classification of preferably 0.650 to 0.850 g/cc, more preferably more than 0.750 g/cc and less than 0.800 g/cc. The loose apparent specific gravity is a value measured with the PT-R powder tester (of Hosokawa Micron Co., Ltd.).

The oil absorptivity of a particle having a particle diameter of 20 to 50 mesh after grinding and classification is preferably lower than 17.0 %, more preferably lower than 10.0 %, the most preferably lower than 7.0 %. This oil absorptivity is a value calculated based on the following equation from the weight (A) of a sample containing the residual oil obtained as follows. 15 g of a sample having a particle diameter of 20 to 50 mesh obtained by grinding and classification is mixed with an appropriate amount of castor oil, the resulting mixture is left at room temperature for 5 minutes and placed in a 80-mesh net bag, oil which is not held on the net bag is removed by centrifugation (1,300 G, 10 minutes) in a centrifugal tube provided with a catch plate, and the weight of the sample containing the residual oil is measured.

$$\text{Oil absorptivity (wt\%)} = (A-15)/15 \times 100$$

The cane sugar which can be used in the present invention is not particularly limited and may be granulated sugar, white sugar or brown sugar all of which are generally available on the market, or a mixture thereof. Granulated sugar is particularly preferred from the viewpoints of fluidity and caking properties.

The mixing ratio of the sugar alcohol to cane sugar for the preparation of the sweetener mixture is preferably 5:95 to 70:30, more preferably 15:85 to 60: 40. A sweetener mixture of the sugar alcohol and cane sugar in the above mixing ratio has a lower calorific value than cane sugar and low cariogenicity effect together with a property of sugar alcohol which rarely causes a Maillard reaction though it is almost the same as cane sugar in terms of the level of sweetness. Therefore, a food containing this sweetener mixture has excellent physical properties, flavor and sweet taste.

The food containing the above sweetener mixture in the present invention is not particularly limited. Examples of the food include adzuki bean jam such as strained adzuki bean pastes, granulated adzuki bean jam and dried adzuki bean jam; Japanese sweets such as adzuki-bean soup with rice cake, buns with a bean-jam filling, sweet jellied adzuki-bean pastes and dumplings flavored with soy sauce; pastries such as cakes, cream puffs, waffles, jellies, puddings, bavarois and chocolates; creams such as whipped cream, butter cream and custard cream; jams such as strawberry jam and marmalade jam; snacks such as biscuits, cookies, pretzels, corn chips and cereals; ices such as ice creams and sherbets ; gums and candies such as chewing gums, hard candies, soft candies and tablet candies; baked goods such as bread, steamed bread, pizza, sponge cakes, castella cake, and doughnuts; premixed flour such as hot cake mixed flour; instant foods such as instant noodles, instant buckwheat noodles, instant Chinese noodles, instant miso-soup, adzuki-bean soup powder and arrowroot starch gruel; health foods such as supplements; soft drink such as fruit drinks, vegetable juice, carbonic acid drinks and canned adzuki-bean soup; popular drinks such as coffee, cocoa and black tea; fish paste products such as boiled fish pastes, tube-shaped fish paste cakes and pounded fish cakes; soups such as soups for noodles; sauces such as barbecue sauces, sauces for roast chicken, mayonnaise, ketchup and dressings; pickles such as lightly salted pickles or rice bran; everyday dishes; foods boiled down in soy; pouch-packed foods; and frozen foods.

In the present invention, the content of the sweetener mixture of a sugar alcohol and cane sugar in each food is not particularly limited because it differs according to the type of the sugar alcohol in use, the type of the food, other components contained in the food, the taste of each individual and others. Therefore, the content of the sweetener mixture in each food may be suitably changed based on physical properties, flavor and sweet taste desired by a user but it is preferably in the range of 5 to 60 wt%. The form of the sweetener mixture before it is contained in a food is preferably powdery or granular but may be liquid prepared by melting it by heating, or a solution by dissolving it in a liquid such as water before use, depending on the type of the food.

As described above, the present invention provides an effect that a food having improved physical properties, flavor and sweet taste is obtained by containing a sweetener mixture of a sugar alcohol and cane sugar in the food as compared with a food which contains only cane sugar or sugar alcohol.

Examples

The following examples are provided for the purpose of further illustrating the present invention but are in no way to be taken as limiting. "%" means "wt%" unless otherwise stated.

Example 1

Sweeteners 1 to 4 were prepared by mixing maltitol as a sugar alcohol with cane sugar in a weight ratio shown in Table 1.

Table 1

| Sweetener No. | Cane sugar | Maltitol |
|---|---|---|
| 1 | 100 | 0 |
| 2 | 85 | 15 |

Table 1 (continued)

| Sweetener No. | Cane sugar | Maltitol |
|---|---|---|
| 3 | 40 | 60 |
| 4 | 0 | 100 |

Production of strained adzuki bean pastes

Adzuki beans were boiled well in water in a pot, cooled, strained, bleached in water and wrung out from a compressor to obtain crude bean jam. 370 g of each of the sweeteners 1 to 4 shown in Table 1 was added to 500 g of this crude bean jam and 150 g of water and kneaded together under heating to obtain strained bean pastes 1 to 4 having a Brix. 55.

organoleptic evaluations

The organoleptic evaluations of touch to the tongue, melting in the mouth, the quality of flavor, aftertaste and the level of sweetness were made on the four different strained bean pastes produced above by 10 panellers to obtain the average values of these organoleptic properties.

The organoleptic evaluations were made based on the following criteria when the sweetener 1 (100 % of cane sugar) was evaluated as "3". The results of the organoleptic evaluations are shown in Table 2.

Criteria

Touch to the tongue: 1 (bad) < 2 < 3 (same) < 4 < 5 (good)
Melting in the mouth: 1 (bad) < 2 < 3 (same) < 4 < 5 (good)
Quality of flavor: 1 (low) < 2 < 3 (same) < 4 < 5 (high)
Aftertaste: 1 (bad) < 2 < 3 (same) < 4 < 5 (good)
Level of sweetness: 1 (low) < 2 < 3 (same) < 4 < 5 (high)

Table 2

| Strained adzuki bean paste and sweetener No. | Touch to the tongue | Melting in the mouth | Quality of flavor | Aftertaste | Level of sweetness |
|---|---|---|---|---|---|
| 1 | 3 | 3 | 3 | 3 | 3 |
| 2 | 4.1 | 3.9 | 3.7 | 4.2 | 2.9 |
| 3 | 4.3 | 4.2 | 3.8 | 4.4 | 2.8 |
| 4 | 4.3 | 3.5 | 3.2 | 4.0 | 1.7 |

The strained adzuki bean pastes 2 and 3 which were foods containing the sweetener mixture of the present invention were evaluated as superior to the strained adzuki bean paste 1 which contained only cane sugar as a sweetener in touch to the tongue, melting in the mouth and aftertaste. They were evaluated as almost the same as the strained adzuki bean paste 1 in the level of sweetness.

Example 2

Production of breads

750.0 g of strong flour, 11.3 g of dry yeast, 6.0 g of salt, 22.5 g of a skim milk powder, 75.0 g of a whole egg, 398 g of water and 187.5 g of each of the sweeteners 1 to 4 shown in Table 1 were injected into a mixer to be mixed together for 8 minutes, and 60.0 g of shortening was added to the resulting mixture and mixed for a further 9 minutes to prepare dough (temperature of 28° C). The dough was fermented at 27° C and a humidity of 75 % for 80 minutes, degassed and further fermented for 30 minutes. The fermented dough was divided into 55 g portions which were rounded and left at 27°C and a humidity of 75 % for 15 minutes and formed round. The formed dough was fermented at 38° C and a humidity of 85 % for 55 minutes and baked in an oven (upper fire temperature of 200° C, lower fire temperature of 190°C) for 13 minutes to obtain breads 1 to 4.

Evaluations of appearances

The breads 1 and 2 had a baked color characteristic of bread and were large enough in volume. The bread 3 had no problems as a product though it had a slightly weak baked color and was not large enough in volume. The bread 4 produced by using only maltitol as a sweetener was inadequately fermented and was small in volume. Its baked color was white and its dough was very sticky.

Organoleptic evaluations

The organoleptic evaluations of hardness and the quality of flavor were made on the four different breads produced above by 10 panellers to obtain the average values of these organoleptic properties.
The organoleptic evaluations were made based on the following criteria when the bread 1 (100 % of cane sugar) was evaluated as "3" . The results of the organoleptic evaluations are shown in Table 3.

Criteria

Hardness: 1 (hard) < 2 < 3 (same) < 4 < 5 (soft)
Quality of flavor: 1 (low) < 2 < 3 (same) < 4 < 5 (high)

Table 3

| Breads and sweetener No. | Hardness | Quality of flavor |
|---|---|---|
| 1 | 3 | 3 |
| 2 | 2.9 | 4.4 |
| 3 | 2.7 | 4.3 |
| 4 | 2.1 | 2.8 |

The breads 2 and 3 which were foods containing the sweetener mixture of the present invention had the same hardness (sensation of eating) as the bread 1 which contained only cane sugar as a sweetener and superior to the bread 1 in the quality of flavor. The bread 4 which contained only maltitol as a sweetener was inferior in all the evaluation items.

Example 3

Production of dumplings flavored with soy sauce

40 g of each of the sweeteners 1 to 4 shown in Table 1 was mixed with 15 g of soy sauce, 3.5 g of potato starch and 50 g of water, and the resulting mixture was put into a pot to be heated for about 2 minutes and then quenched to prepare sauces 1 to 4 for dumplings.
55 g of glutinous rice and 44 g of water were well mixed together, the mixture was rounded into 8 g balls, and the balls were depressed at the center, boiled for 5 minutes and cooled in water to make dumplings. The above sauces 1 to 4 were each uniformly applied to the dumplings to obtain dumplings flavored with soy sauce.

Organoleptic evaluations

The organoleptic evaluations of the quality of flavor, aftertaste and the level of sweetness were made on the four different dumplings flavored with soy sauce produced above by 10 panellers to obtain the average values of these organoleptic properties.
The organoleptic evaluations were made based on the following criteria when the dumpling 1 flavored with soy sauce (100 % of cane sugar) was evaluated as "3". The results of the organoleptic evaluations are shown in Table 4.

Criteria

Quality of flavor: 1 (low) < 2 < 3 (same) < 4 < 5 (high)
Aftertaste: 1 (bad) < 2 < 3 (same) < 4 < 5 (good)
Level of sweetness: 1 (low) < 2 < 3 (same) < 4 < 5 (high)

Table 4

| Dumpling and sweetener No. | Quality of flavor | Aftertaste | Level of sweetness |
|---|---|---|---|
| 1 | 3 | 3 | 3 |
| 2 | 4.0 | 3.8 | 2.8 |
| 3 | 3.2 | 4.3 | 2.7 |
| 4 | 2.6 | 2.8 | 2.2 |

The dumplings 2 and 3 flavored with soy sauce which were foods containing the sweetener mixture of the present invention were evaluated as superior to the dumpling 1 flavored with soy sauce which contained only cane sugar as a sweetener in the quality of flavor and aftertaste and as almost the same as the dumplings 1 flavored with soy sauce in the level of sweetness. The dumpling 4 flavored with soy sauce which contained only maltitol as a sweetener was inferior to the dumpling 1 flavored with soy sauce in all the evaluation items.

Example 4

Production of custard creams

40 g of a whole egg was beaten with an eggbeater, 40 g of each of the sweeteners 1 to 4 shown in Table 1 was added to this and stirred for 1 minute, 16 g of corn starch was added to the resulting mixture and stirred for another 1 minute, and then 200 g of milk heated at 60° C was added little by little under agitation. The obtained mixture was transferred to a pot and stirred under heating on a hot plate. After about 1.5 minutes of agitation from the time when the temperature of the mixture became 76° C, the pot was removed from the hot plate, and the mixture was strained and cooled to obtain custard creams 1 to 4.

Organoleptic evaluations

The organoleptic evaluations of viscosity, the quality of flavor, aftertaste and the level of sweetness were made on the four different custard creams produced above by 10 panellers to obtain the average values of these organoleptic properties.
The organoleptic evaluations were made based on the following criteria when the custard cream 1 (100 % of cane sugar) was evaluated as "3". The results of the organoleptic evaluations are shown in Table 5.

Criteria

Viscosity: 1 (low) < 2 < 3 (same) < 4 <5 (high)
Quality of flavor: 1 (low) < 2 < 3 (same) < 4 < 5 (high)
Aftertaste: 1 (bad) < 2 < 3 (same) < 4 < 5 (good)
Level of sweetness: 1 (low) < 2 < 3 (same) < 4 < 5 (high)

Table 5

| Custard cream and sweetener No. | Viscosity | Quality of flavor | Aftertaste | Level of sweetness |
|---|---|---|---|---|
| 1 | 3 | 3 | 3 | 3 |
| 2 | 2.8 | 4.0 | 4.3 | 2.9 |
| 3 | 2.7 | 3.8 | 3.7 | 2.7 |
| 4 | 1.8 | 3.3 | 2.8 | 2.2 |

The custard creams 2 and 3 which were foods containing the sweetener mixture of the present invention were evaluated as superior to the custard cream 1 which contained only cane sugar as a sweetener in the quality of flavor and aftertaste. They were evaluated as almost the same as the custard cream 1 in viscosity and the level of sweetness.

Example 5

Production of apple jellies

77.0 g of each of the sweeteners 1 to 4 shown in Table 1 was mixed with 5.5 g of a gelling agent and 255.7 ml of water and dissolved under agitation at 85° C for 15 minutes. 160 ml of apple juice, 0.6 g of trisodium citrate and 1.2 g of citric acid were added to the resulting solution and heated under agitation to obtain a solution having a sugar level of 22 and a pH of 3.8, and the solution was poured into a container. The solution was sterilized at 85° C for 20 minutes and cooled to obtain apple jellies 1 to 4.

Organoleptic evaluations

The organoleptic evaluations of the development of flavor, the duration of flavor, the disappearance of sweetness and the level of sweetness were made on the four different apple jellies produced above by 10 panellers to obtain the average values of these organoleptic properties.
The organoleptic evaluations were made based on the following criteria when the apple jelly 1 (100 % of cane sugar) was evaluated as "3". The results of the organoleptic evaluations are shown in Table 6.

Criteria

Development of flavor: 1 (slow) < 2 < 3 (same) < 4 < 5 (fast)
Duration of flavor: 1 (short) < 2 < 3 (same)< 4 < 5 (long)
Disappearance of sweetness: 1 (bad) < 2 < 3 (same)< 4 < 5 (good)
Level of sweetness: 1 (low) < 2 < 3 (same)< 4 < 5 (high)

Table 6

| Apple jelly and sweetener No. | Development of flavor | Duration of flavor | Disappearance of sweetness | Level of sweetness |
|---|---|---|---|---|
| 1 | 3 | 3 | 3 | 3 |
| 2 | 3.8 | 4.1 | 4.3 | 2.9 |
| 3 | 3.6 | 3.5 | 4.1 | 2.7 |
| 4 | 2.9 | 2.7 | 3.3 | 1.9 |

The apple jellies 2 and 3 which were foods containing the sweetener mixture of the present invention were evaluated as superior to the apple jelly 1 which contained only cane sugar as a sweetener in the development of flavor, the duration of flavor and the disappearance of sweetness. They were evaluated as almost the same as the apple jelly 1 in the level of sweetness. The apple jelly 4 which contained only maltitol as a sweetener was inferior to the apple jellies 2 and 3 in all the evaluation items.

Example 6

Production of soft adzuki-bean jellies

2.0 g of powder agar was added to 287.5 ml of water, and the resulting mixture was boiled to completely dissolve the agar in water. 151. 0 g of each of the sweeteners 1 to 4 shown in Table 1 was added to the resulting solution and heated to be dissolved in the solution, 59.0 g of a dry bean jam powder was added to the obtained solution and heated under agitation so as to be completely dissolved, and the sugar level of the solution was adjusted to 38. After the obtained product was cooled somewhat, it was placed in a container, sterilized at 90°C for 20 minutes and cooled to obtain soft adzuki-bean jellies 1 to 4.

Organoleptic evaluations

The organoleptic evaluations of the quality of flavor, the duration of flavor and the level of sweetness were made on the four different soft adzuki-bean jellies 1 to 4 produced above by 10 panellers to obtain the average values of these organoleptic properties.

The organoleptic evaluations were made based on the following criteria when the soft adzuki-bean jelly 1 (100 % of cane sugar) was evaluated as "3". The results of the organoleptic evaluations are shown in Table 7.

Criteria

Quality of flavor: 1 (bad) <2 < 3 (same) < 4 < 5 (good)
Duration of flavor: 1 (short) <2 < 3 (same) < 4 < 5 (long)
Level of sweetness: 1 (low) <2 < 3 (same) < 4 < 5 (high)

Table 7

| Soft adzuki-bean jelly and sweetener No. | Quality of flavor | Duration of flavor | Level of sweetness |
|---|---|---|---|
| 1 | 3 | 3 | 3 |
| 2 | 4.2 | 3.9 | 3.0 |
| 3 | 4.1 | 3.7 | 2.8 |
| 4 | 2.9 | 3.1 | 2.4 |

The soft adzuki-bean jellies 2 and 3 which were foods containing the sweetener mixture of the present invention were evaluated as superior to the soft adzuki-bean jelly 1 which contained only cane sugar as a sweetener in the quality of flavor and the duration of flavor. They were evaluated as almost the same as the soft adzuki-bean jelly 1 in the level of sweetness. The soft adzuki-bean jelly 4 which contained only maltitol as a sweetener was inferior to the soft adzuki-bean jellies 2 and 3 in all the evaluation items.

Example 7

Production of strawberry jams

300 g of strawberries were washed in water, their calyces were removed, and they were cut into cubes. 180.0 g of each of the sweeteners 1 to 4 shown in Table 1 was mixed with the strawberry cubes, left at room temperature for 1 hour, transferred to a pot and cooked over a low flame under agitation. When juice came out, the flame was turned up to "medium" to adjust its sugar level to 59, 6.0 ml of lemon juice was added, and then heating was stopped. The obtained product was placed in a container, and the container was sealed up and cooled to room temperature to obtain strawberry jams 1 to 4.

Organoleptic evaluations

The organoleptic evaluations of the quality of flavor, the duration of flavor, the disappearance of sweetness, balance between sweet taste and acidic taste (mildness) and level of sweetness were made on the four different strawberry jams produced above by 10 panellers to obtain the average values of these organoleptic properties.

The organoleptic evaluations were made based on the following criteria when the strawberry jam 1 (100 % of cane sugar) was evaluated as "3" . The results of the organoleptic evaluations are shown in Table 8.

Criteria

Quality of flavor: 1 (low) < 2 < 3 (same) < 4 < 5 (high)
Duration of flavor: 1 (short) <2 < 3 (same) < 4 < 5 (long)
Disappearance of sweetness: 1 (bad) < 2 < 3 (same)< 4 < 5 (good)
Balance between sweet taste and acidic taste (mildness): 1 (bad) < 2 < 3 (same)< 4 < 5 (good)
Level of sweetness: 1 (low) < 2 < 3 (same) < 4 < 5 (high)

Table 8

| Strawberry jam and sweetener No. | Quality of flavor | Duration of flavor | Disappearance of sweetness | Mildness | Level of sweetness |
|---|---|---|---|---|---|
| 1 | 3 | 3 | 3 | 3 | 3 |
| 2 | 3.9 | 4.0 | 4.0 | 4.0 | 2.9 |
| 3 | 3.8 | 3.9 | 4.0 | 4.2 | 2.7 |
| 4 | 3.1 | 3.1 | 3.3 | 3.0 | 2.5 |

The strawberry jams 2 and 3 which were foods containing the sweetener mixture of the present invention were evaluated as superior to the strawberry jam 1 which contained only cane sugar as a sweetener in the quality of flavor, the duration of flavor, the disappearance of sweetness and mildness. They were evaluated as almost the same as the strawberry jam 1 in the level of sweetness. The strawberry jam 4 which contained only maltitol as a sweetener was inferior to the strawberry jams 2 and 3 in all the evaluation items.

Example 8

Production of custard puddings

285 ml of milk and 71.0 g of each of the sweeteners 1 to 4 shown in Table 1 were mixed together under heating at a temperature not higher than 40° C to dissolve the sweetener in milk and then cooled to 33°C. 142.5 g of a whole beaten egg was added to the resulting solution and stirred, 1.5 ml of vanilla essence was added to this and stirred, and the resulting product was strained. The strained product was injected into pudding cups which were then placed on a pan filled with water and steamed in an oven at 180° C for 35 minutes and further with the remaining heat for 10 minutes. They were cooled in a refrigerator to obtain custard puddings 1 to 4.

Organoleptic evaluations

The organoleptic evaluations of the quality of flavor, melting in the mouth, aftertaste and the level of sweetness were made on the four different custard puddings produced above by 10 panellers to obtain the average values of these organoleptic properties.

The organoleptic evaluations were made based on the following criteria when the custard pudding 1 (100 % of cane sugar) was evaluated as "3" . The results of the organoleptic evaluation are shown in Table 9.

Criteria

Quality of flavor: 1 (low) < 2 < 3 (same) < 4 < 5 (high)

Melting in the mouth: 1 (bad) < 2 < 3 (same) < 4 < 5 (good)
Aftertaste: 1 (bad) < 2 < 3 (same) < 4 < 5 (good)
Level of sweetness: 1 (low) < 2 < 3 (same) < 4 < 5 (high)

Table 9

| Custard pudding and sweetener No. | Quality of flavor | Melting in the mouth | Aftertaste | Level of sweetness |
|---|---|---|---|---|
| 1 | 3 | 3 | 3 | 3 |
| 2 | 4.0 | 4.0 | 4.3 | 2.9 |
| 3 | 4.2 | 4.2 | 4.0 | 2.7 |
| 4 | 2.6 | 2.6 | 3.5 | 2.1 |

The custard puddings 2 and 3 which were foods containing the sweetener mixture of the present invention were evaluated as superior to the custard pudding 1 which contained only cane sugar as a sweetener in the quality of flavor, melting in the mouth and aftertaste. They were evaluated as almost the same as the custard pudding 1 in the level of sweetness. The custard pudding 4 which contained only maltitol as a sweetener was inferior to the custard puddings 2 and 3 in all the evaluation items.

Example 9

Production of lemon-flavored drinks

50.0 g of each of the sweeteners 1 to 4 shown in Table 1 was added to 20 ml of lemon juice and 430 ml of water and stirred well at room temperature to obtain lemon-flavored drinks 1 to 4.

Organoleptic evaluations

The organoleptic evaluations of the quality of flavor, aftertaste, balance between sweet and acidic tastes (mildness) and the level of sweetness were made on the four different lemon-flavored drinks produced above by 10 panellers to obtain the average values of these organoleptic properties.
The organoleptic evaluations were made based on the following criteria when the lemon-flavored drink 1 (100 % of cane sugar) was evaluated as "3". The results of the organoleptic evaluations are shown in Table 10.

Criteria

Quality of flavor: 1 (low) < 2 < 3 (same) < 4 < 5 (high)
Aftertaste: 1 (bad) < 2 < 3 (same) < 4 < 5 (good)
Balance between sweet taste and acidic taste (mildness): 1 (bad) < 2 < 3 (same)< 4 < 5 (good)
Level of sweetness: 1 (low) < 2 < 3 (same) < 4 < 5 (high)

Table 10

| Lemon-flavored drink/sweetener No. | Quality of flavor | Aftertaste | Mildness | Level of sweetness |
|---|---|---|---|---|
| 1 | 3 | 3 | 3 | 3 |
| 2 | 4.1 | 3.9 | 4.4 | 2.8 |
| 3 | 3.9 | 4.0 | 3.6 | 2.7 |
| 4 | 2.9 | 2.7 | 2.1 | 2.2 |

The lemon-flavored drinks 2 and 3 which were foods containing the sweetener mixture of the present invention were evaluated as superior to the lemon-flavored drink 1 which contained only cane sugar as a sweetener in the quality of flavor, aftertaste and mildness. They were evaluated as almost the same as the lemon-flavored drink 1 in the level of sweetness. The lemon-flavored drink 4 which contained only maltitol as a sweetener was inferior to the lemon-flavored drinks 2 and 3 in all the evaluation items.

Example 10

Production of cold coffee drinks

50 g of each of the sweeteners 1 to 4 shown in Table 1 and 50 ml of milk were added to 40 ml of sugarless coffee, stirred well and cooled in a refrigerator at about 5°C for 3 hours to obtain cold coffee drinks 1 to 4.

Organoleptic evaluations

The organoleptic evaluations of the development of flavor, aftertaste, the disappearance of sweetness, a refreshing taste and the level of sweetness were made on the four different cold coffee drinks produced above by 10 panellers to obtain the average values of these organoleptic properties.
The organoleptic evaluations were made based on the following criteria when the cold coffee drink 1 (100 % of cane sugar) was evaluated as "3". The results of the organoleptic evaluations are shown in Table 11.

Criteria

Development of flavor: 1 (slow) < 2 <3 (same) < 4 < 5 (fast)
Aftertaste: 1 (bad) < 2 < 3 (same) < 4 < 5 (good)
Disappearance of sweetness: 1 (bad) < 2 < 3 (same) < 4 < 5 (good)
Refreshing taste: 1 (weak) < 2 < 3 (same)< 4 < 5 (strong)
Level of sweetness: 1 (low) < 2 < 3 (same) < 4 < 5 (high)

Table 11

| Cold coffee drink and sweetener No. | Development of flavor | Aftertaste | Disappearance of sweetness | Refreshing taste | Level of sweetness |
|---|---|---|---|---|---|
| 1 | 3 | 3 | 3 | 3 | 3 |
| 2 | 3.8 | 4.2 | 4.0 | 4.0 | 2.8 |
| 3 | 3.6 | 4.0 | 4.2 | 4.0 | 2.6 |
| 4 | 3.4 | 3.9 | 3.8 | 3.3 | 1.9 |

The cold coffee drinks 2 and 3 which were foods containing the sweetener mixture of the present invention were evaluated as superior to the cold coffee drink 1 which contained only cane sugar as a sweetener in the development of flavor, aftertaste, the disappearance of sweetness and a refreshing taste.

Example 11

Production of ice creams

110 g of each of the sweeteners 1 to 4 shown in Table 1 was mixed with 500 g of milk and 100 g of the yolk of an egg and heated at 82 to 85° C. When all the ingredients were dissolved, they were strained and cooled. 0.1 ml of vanilla essence was added to and mixed with the obtained product, the resulting mixture was injected into an ice cream maker, 50 g of whipped fresh cream was added to the mixture and frozen, and the frozen product was filled into a cup and solidified at -30°C or lower to obtain ice creams 1 to 4.

Organoleptic evaluations

The organoleptic evaluations of the development of flavor, aftertaste, the disappearance of sweetness, a refreshing taste and the level of sweetness were made on the four different ice creams produced above by 10 panellers to obtain the average values of these organoleptic properties.

The organoleptic evaluations were made based on the following criteria when the ice cream 1 (100 % of cane sugar) was evaluated as "3". The results of the organoleptic evaluations are shown in Table 12.

Criteria

Development of flavor: 1 (slow) < 2 <3 (same) < 4 < 5 (fast)
Aftertaste: 1 (bad) < 2 < 3 (same) < 4 < 5 (good)
Disappearance of sweetness: 1 (bad) < 2 < 3 (same)< 4 < 5 (good)
Refreshing taste: 1 (weak) < 2 < 3 (same)< 4 < 5 (strong)
Level of sweetness: 1 (low) < 2 < 3 (same) < 4 < 5 (high)

Table 12

| Ice cream and sweetener No. | Development of flavor | Aftertaste | Disappearance of sweetness | Refreshing taste | Level of sweetness |
|---|---|---|---|---|---|
| 1 | 3 | 3 | 3 | 3 | 3 |
| 2 | 3.6 | 4.2 | 4.1 | 4.2 | 2.9 |
| 3 | 3.5 | 3.8 | 4.3 | 4.0 | 2.7 |
| 4 | 2.9 | 3.1 | 3.1 | 2.9 | 2.0 |

The ice creams 2 and 3 which were foods containing the sweetener mixture of the present invention were evaluated as superior to the ice cream 1 which contained only cane sugar as a sweetener in the development of flavor, aftertaste, the disappearance of sweetness and a refreshing taste.

Example 12

Production of lightly salted pickles

35 g of salt, 70 g of each of the sweeteners 1 to 4 shown in Table 1, 3.5 g of a seasoning, 26.5 g of vinegar, 12.5 g of soy sauce and 2 g of powder kelp were dissolved in 351 ml of water to prepare sauces for making pickles. 300 g of cucumber was cut and put into a vinyl bag filled with each of the above sauces, pressed under a stone and left in a refrigerator for 3 hours to obtain lightly pickled cucumbers 1 to 4.

Organoleptic evaluations

The organoleptic evaluations of the quality of flavor, aftertaste, the disappearance of sweetness, crunchiness and the level of sweetness were made on the four different lightly pickled cucumbers produced above by 10 panellers to obtain the average values of these organoleptic properties.

The organoleptic evaluations were made based on the following criteria when the lightly pickled cucumber 1 (100 % of cane sugar) was evaluated as "3". The results of the organoleptic evaluations are shown in Table 13.

Criteria

Quality of flavor: 1 (low) < 2 < 3 (same) < 4 < 5 (high)
Aftertaste: 1 (bad) < 2 < 3 (same) < 4 < 5 (good)
Disappearance of sweetness: 1 (bad) < 2 < 3 (same)< 4 < 5 (good)
Crunchiness: 1 (bad) < 2 < 3 (same)< 4 < 5 (good)
Level of sweetness: 1 (low) < 2 < 3 (same) < 4 < 5 (high)

Table 13

| lightly pickled cucumber and sweetener No. | Quality of flavor | Aftertaste | Disappearance of sweetness | Crunchiness | Level of sweetness |
|---|---|---|---|---|---|
| 1 | 3 | 3 | 3 | 3 | 3 |
| 2 | 4.2 | 4.1 | 3.8 | 3.8 | 2.8 |
| 3 | 3.6 | 3.8 | 4.1 | 3.6 | 2.6 |
| 4 | 2.9 | 2.4 | 4.5 | 3.2 | 2.2 |

The lightly pickled cucumbers 2 and 3 which were foods containing the sweetener mixture of the present invention were evaluated as superior to the lightly pickled cucumber 1 which contained only cane sugar as a sweetener in the quality of flavor, aftertaste, the disappearance of sweetness and crunchiness.

Example 13

Production of sand lances boiled down in soy

75 g of each of the sweeteners 1 to 4 shown in Table 1, 15 g of ginger, 75 g of soy sauce, 30 g of sweet sake and 30 g of cooking sake were mixed together and cooked over a strong fire, 150 g of dried sand lances were added and cooked over a strong fire, and the resulting soup stock was boiled down at a temperature that did not cause it to boil over while the scum was skimmed off. A small lid was placed directly on the sand lance to cook it well over a medium flame so that the soup stock did not boil over and when the amount of the soup stock had been sufficiently reduced, the gas was set at "low". The pot was shaken to mix the contents well, and this was repeated several times until the soup stock was gone. The contents were put into a sieve to drain off the stock and cooled with air to obtain different sand lances 1 to 4 boiled down in soy.

Organoleptic evaluations

The organoleptic evaluations of the quality of flavor, aftertaste, the disappearance of sweetness, balance between sweet and hot tastes, and the level of sweetness were made on the four different sand lances boiled down in soy produced above by 10 panellers to obtain the average values of these organoleptic properties.
The organoleptic evaluations were made based on the following criteria when the sand lance 1 boiled down in soy (100 % of cane sugar) was evaluated as "3". The results of the organoleptic evaluations are shown in Table 14.

Criteria

Quality of flavor: 1 (low) < 2 < 3 (same) < 4 < 5 (high)
Aftertaste: 1 (bad) < 2 < 3 (same) < 4 < 5 (good)
Disappearance of sweetness: 1 (bad) < 2 < 3 (same)< 4 < 5 (good)
Balance between sweet taste and salty taste: 1 (bad) < 2 < 3 (same)< 4 < 5 (good)
Level of sweetness: 1 (low) < 2 < 3 (same) < 4 < 5 (high)

Table 14

| Sand lance boiled down in soy and sweetener No. | Quality of flavor | Aftertaste | Disappearance of sweetness | Balance between sweet and salty tastes | Level of sweetness |
|---|---|---|---|---|---|
| 1 | 3 | 3 | 3 | 3 | 3 |
| 2 | 3.7 | 4.3 | 4.0 | 4.2 | 2.9 |
| 3 | 3.5 | 3.6 | 3.7 | 3.5 | 2.7 |

Table 14  (continued)

| Sand lance boiled down in soy and sweetener No. | Quality of flavor | Aftertaste | Disappearance of sweetness | Balance between sweet and salty tastes | Level of sweetness |
|---|---|---|---|---|---|
| 4 | 3.2 | 2.6 | 3.5 | 2.7 | 2.2 |

The sand lances 2 and 3 boiled down in soy which were foods containing the sweetener mixture of the present invention were evaluated as superior to the sand lance 1 boiled down in soy which contained only cane sugar as a sweetener in the quality of flavor, aftertaste, the disappearance of sweetness, and balance between sweet and hot tastes.

Example 14

Production of sweet cooked "Taisyo-Kintoki" beans

200 g of Taisyo-Kintoki beans was immersed in 600 g of water and left overnight. This was transferred to a pot directly and heated, flame was turned low when it was boiled and kept low for about 3 minutes while the scum was skimmed off, and then the boiled soup was thrown away. 400 of water was newly added and heated, the flame was turned low when it was boiled, and the Taisyo-Kintoki beans were further heated for 20 minutes while the scum was skimmed off. During this, water was added three times in a total amount of 150 g. Each of the sweeteners 1 to 4 shown in Table 1 was added three times in a total amount of 200 g and heated, 1 g of table salt was added when the beans were boiled again, and the gas was kept low for about 10 minutes. When the total amount became about 740 g (Brix. 52), heating was stopped, the Taisyo-Kintoki beans were transferred to a preservation container, and when the beans were cooled somewhat, the container was covered with a lid and left to obtain sweet cooked Taisyo-Kintoki beans 1 to 4.

Organoleptic evaluations

The organoleptic evaluations of the quality of flavor, aftertaste, the disappearance of sweetness, color and the level of sweetness were made on the four different sweet cooked Taisyo-Kintoki beans produced above by 10 panellers to obtain the average values of these organoleptic properties.
The organoleptic evaluations were made based on the following criteria when the sweet cooked Taisyo-Kintoki beans 1 (100 % of cane sugar) was evaluated as "3". The results of the organoleptic evaluations are shown in Table 15.

Criteria

Quality of flavor: 1 (low) < 2 < 3 (same) < 4 < 5 (high)
Aftertaste: 1 (bad) < 2 < 3 (same) < 4 < 5 (good)
Disappearance of sweetness: 1 (bad) < 2 < 3 (same)< 4 < 5 (good)
Color: 1 (bad) < 2 < 3 (same) < 4 < 5 (good)
Level of sweetness: 1 (low) < 2 < 3 (same) < 4 < 5 (high)

Table 15

| Sweet cooked Taisho-Kintoki beans and sweetener No. | Quality of flavor | Aftertaste | Disappearance of sweetness | Color | Level of sweetness |
|---|---|---|---|---|---|
| 1 | 3 | 3 | 3 | 3 | 3 |
| 2 | 4.0 | 4.4 | 3.8 | 3.5 | 2.8 |
| 3 | 3.7 | 3.6 | 4.2 | 3.3 | 2.6 |
| 4 | 2.8 | 2.5 | 4.0 | 3.0 | 1.7 |

The sweet cooked Taisyo-Kintoki beans 2 and 3 which were foods containing the sweetener mixture of the present invention were evaluated as superior to the sweet cooked Taisyo-Kintoki beans 1 which contained only cane sugar as a sweetener in the quality of flavor, aftertaste, the disappearance of sweetness and color.

Example 15

**Production of cheese cakes**

300 g of cream cheese was whipped with an eggbeater, and 50 ml of milk was added to and kneaded with the whipped cream cheese. 45 of each of the sweeteners 1 to 4 shown in Table 1 and 50 g of the yolk of an egg were added to and mixed with the above mixture, and further 30 g of weak flour, 13 ml of lemon juice and 0.1 ml of vanilla essence were added to and mixed with the above mixture. Meringue prepared from 105 g of the white of an egg and each of the sweeteners 1 to 4 shown in Table 1 was added to and mixed with the above mixture, 600 g of the resulting mixture was put into a mold having a diameter of 18 cm, degassed and baked in an oven at 180° C for 45 minutes to obtain cheese cakes 1 to 4.

Organoleptic evaluations

The organoleptic evaluations of the quality of flavor, aftertaste, the disappearance of sweetness, the strength of a lemon flavor and the level of sweetness were made on the four different cheese cakes produced above by 10 panellers to obtain the average values of these organoleptic evaluations.
The organoleptic evaluations were made based on the following criteria when the cheese cake 1 (100 % of cane sugar) was evaluated as "3". The results of the organoleptic evaluations are shown in Table 16.

Criteria

Quality of flavor: 1 (low) < 2 < 3 (same) < 4 < 5 (high)
Aftertaste: 1 (bad) < 2 < 3 (same) < 4 < 5 (good)
Disappearance of sweetness: 1 (bad) < 2 < 3 (same)< 4 < 5 (good)
Strength of lemon flavor: 1 (weak) < 2 < 3 (same)< 4 < 5 (strong)
Level of sweetness: 1 (low) < 2 < 3 (same) < 4 < 5 (high)

Table 16

| Cheesecake and sweetener No. | Quality of flavor | Aftertaste | Disappearance of sweetness | Strength of lemon flavor | Level of sweetness |
|---|---|---|---|---|---|
| 1 | 3 | 3 | 3 | 3 | 3 |
| 2 | 4.1 | 4.2 | 4.3 | 4.0 | 2.8 |
| 3 | 3.8 | 3.5 | 4.3 | 3.6 | 2.7 |
| 4 | 3.5 | 2.5 | 3.8 | 3.0 | 2.2 |

The cheese cakes 2 and 3 which were foods containing the sweetener mixture of the present invention were evaluated as superior to the cheese cake 1 which contained only cane sugar as a sweetener in the quality of flavor, aftertaste, the disappearance of sweetness, and the strength of a lemon flavor.

Example 16

Production of sponge cakes

100 g of a whole egg was put in a stainless steel ball and the ball was warmed in hot water. When the temperature of the ball reached 33°C, 75 g of each of the sweeteners 1 to 4 shown in Table 1 was added and stirred. After 30 seconds of agitation, the ball was removed from the hot water and kept stirred until its specific gravity reached 0.33. Weak flour which had been sifted was added three times in a total amount of 50 g and mixed with the above mixture using a rubber spatula to prepare batter having a specific gravity of 0.40. 150 g of this batter was placed in a mold having a diameter of 18 cm and baked in an oven at 160° C for 35 minutes to obtain sponge cakes.

Organoleptic evaluations

The organoleptic evaluations of texture, the quality of flavor, the disappearance of sweetness, aftertaste and the level of sweetness were made on the four different sponge cakes produced above by 10 panellers to obtain the average values of these organoleptic properties.
The organoleptic evaluations were made based on the following criteria when the sponge cake 1 (100 % of cane sugar) was evaluated as "3". The results of the organoleptic evaluations are shown in Table 17.

Criteria

Texture: 1 (low) < 2 < 3 (same) < 4 < 5 (high)
Quality of flavor: 1 (low) < 2 < 3 (same) < 4 < 5 (high)
Disappearance of sweetness: 1 (bad) < 2 < 3 (same)< 4 < 5 (good)
Aftertaste: 1 (bad) < 2 < 3 (same) < 4 < 5 (good)
Level of sweetness: 1 (low) < 2 < 3 (same) < 4 < 5 (high)

Table 17

| Sponge cake and sweetener No. | Texture | Quality of flavor | Disappearance of sweetness | Aftertaste | Level of sweetness |
|---|---|---|---|---|---|
| 1 | 3 | 3 | 3 | 3 | 3 |
| 2 | 4.1 | 4.0 | 4.1 | 4.3 | 2.8 |
| 3 | 4.3 | 3.5 | 4.3 | 3.5 | 2.6 |
| 4 | 3.1 | 2.6 | 4.5 | 2.7 | 1.5 |

The sponge cakes 2 and 3 which were foods containing the sweetener mixture of the present invention were evaluated as superior to the sponge cake 1 which contained only cane sugar as a sweetener in texture, the quality of flavor, aftertaste and the disappearance of sweetness.

Example 17

Production of lemon teas

800 ml of hot water was poured into 12 g of Ceylon tea leaves, and the leaves were steamed for 2 minutes to make tea. 0.8 g of lemon juice and 8 g of each of the sweeteners 1 to 4 shown in Table 1 were added to 91.2 g of tea and stirred to be dissolved to obtain lemon teas.

Organoleptic evaluations

The organoleptic evaluations of the disappearance of sweetness, the duration of a lemon flavor, the strength of astringency, the quality of flavor and the level of sweetness were made on the four different lemon teas produced above by 10 panellers to obtain the average values of these organoleptic properties.
The organoleptic evaluations were made based on the following criteria when the lemon tea 1 (100 % of cane sugar) was evaluated as "3". The results of the organoleptic evaluations are shown in Table 18.

Criteria

Disappearance of sweetness: 1 (bad) < 2 < 3 (same)< 4 < 5 (good)
Duration of lemon flavor: 1 (short) < 2 < 3 (same)< 4 < 5 (long)

Strength of astringency: 1 (weak) < 2 < 3 (same) < 4 < 5 (strong)
Quality of flavor: 1 (low) < 2 < 3 (same) < 4 < 5 (high)
Level of sweetness: 1 (low) < 2 < 3 (same) < 4 < 5 (high)

Table 18

| Lemon tea and sweetener No. | Disappearance of sweetness | Duration of lemon flavor | Strength of astringency | Quality of flavor | Level of sweetness |
|---|---|---|---|---|---|
| 1 | 3 | 3 | 3 | 3 | 3 |
| 2 | 4.0 | 4.0 | 3.1 | 3.0 | 2.9 |
| 3 | 4.3 | 3.6 | 3.5 | 2.9 | 2.7 |
| 4 | 4.7 | 2.3 | 4.2 | 1.5 | 1.6 |

The lemon teas 2 and 3 which were foods containing the sweetener mixture of the present invention were evaluated as superior to the lemon tea 1 which contained only cane sugar as a sweetener in the disappearance of sweetness and the duration of a lemon flavor. The lemon tea 2 was evaluated as almost the same as the lemon tea 1 in the strength of astringency and the quality of flavor. The lemon tea 3 had a little strong astringency but was almost the same as the lemon tea 1 in the quality of flavor and had no problem as lemon tea. The lemon tea 4 which contained only maltitol as a sweetener was satisfactory in the disappearance of sweetness but had a strong astringency and was inferior to the lemon teas 2 and 3 in the duration of flavor and the quality of flavor.

Example 18

Production of sweetened "Kintoki" beans

910 g of each of the sweeteners 1 to 4 shown in Table 1 and 1,100 g of water were put into a pot and heated under agitation to dissolve the sweetener in water in order to prepare a syrup. 500 g of boiled Kintoki beans placed in a basket were injected into the pot containing the syrup and heated over a low flame, heating was stopped when the temperature reached 99° C, and the Kintoki beans were left as they were for 15 hours. Then the Kintoki beans were heated over a low flame again and taken out from the pot together with the basket when the temperature reached 99° C . 600 g of each of the above sweeteners 1 to 4 shown in Table 1 was further added to the remaining syrup in the pot and dissolved in the syrup to adjust BRIX of the syrup to 65 %, the beans were added to the syrup together with the basket and heated on a low flame again, heating was stopped when the temperature reached 99° C, and the beans were left as they were for 15 hours. The beans were heated over a low flame again and taken out from the pot together with the basket when the temperature reached 99°C. The syrup remaining in the pot was boiled down over a strong fire until the temperature reached 113° C, heating was stopped, the beans were added to the syrup together with the basket, immersed in the syrup for 30 minutes and heated up to 99°C over a low flame . Thereafter, the beans were taken out from the pot together with the basket, the syrup was drained off from the beans while the beans were cooled in the pot until the surface temperature of the beans reached 45 to 50° C, the beans were spread over a bamboo screen, and each of the sweeteners as shown Table 1 was sprinkled over the beans in an amount of 3 % based on the total weight of the beans after immersion in the syrup to cover the entire surface of each bean with the sweetener. The beans were further cooled, covered with 2 % of the sweetener shown in Table 1 again while heat still remained, completely cooled and put through a wide-meshed sieve to obtain sweetened Kintoki beans.

Organoleptic evaluations

The organoleptic evaluations of the quality of flavor, the duration of flavor, the disappearance of sweetness, hardness and the level of sweetness were made on the four different sweetened Kintoki beans produced above by 10 panellers to obtain the average values of these organoleptic properties.
The organoleptic evaluations were made based on the following criteria when the sweetened Kintoki beans 1 (100 % of cane sugar) were evaluated as "3". The results of the organoleptic evaluations are shown in Table 19.

Criteria

Quality of flavor: 1 (low) < 2 < 3 (same) < 4 < 5 (high)
Duration of flavor: 1 (short) <2 < 3 (same) < 4 < 5 (long)
Disappearance of sweetness: 1 (bad) < 2 < 3 (same)< 4 < 5 (good)
Hardness: 1 (soft) < 2 < 3 (same) < 4 < 5 (hard)
Level of sweetness: 1 (low) < 2 < 3 (same) < 4 < 5 (high)

Table 19

| Sweetened Kintoki beans and sweetener No. | Quality of flavor | Duration of flavor | Disappearance of sweetness | Hardness | Level of sweetness |
|---|---|---|---|---|---|
| 1 | 3 | 3 | 3 | 3 | 3 |
| 2 | 3.9 | 3.9 | 4.0 | 3.1 | 2.8 |
| 3 | 3.6 | 3.6 | 4.1 | 3.3 | 2.6 |
| 4 | 2.0 | 1.8 | 4.5 | 4.2 | 1.4 |

The sweetened Kintoki beans 2 and 3 which were foods containing the sweetener mixture of the present invention were evaluated as superior to the sweetened Kintoki beans 1 which contained only cane sugar as a sweetener in the quality of flavor, the duration of flavor and the disappearance of sweetness. The sweetened Kintoki beans 2 and 3 were evaluated as almost the same as the sweetened Kintoki beans 1 in hardness. The sweetened Kintoki beans 4 which contained only maltitol as a sweetener were superior to the sweetened Kintoki beans 2 and 3 in the disappearance of sweetness but hard and inferior in the quality of flavor and the duration of flavor.

**Claims**

1. A sweetener mixture-containing food which comprises a sweetener mixture of a sugar alcohol and cane sugar.

2. The sweetener mixture-containing food of claim 1, wherein the mixing ratio (weight ratio) of the sugar alcohol to cane sugar is 5:95 to 70:30.

3. The sweetener mixture-containing food of claim 1 or 2 which contains the sweetener mixture of a sugar alcohol and cane sugar in an amount of 5 to 60 wt%.

4. The sweetener mixture-containing food of any one of claims 1 to 3, wherein the sugar alcohol is at least one selected from the group consisting of maltitol, sorbitol, hydrogenated isomaltulose, erythritol, lactitol and xylitol.

5. The sweetener mixture-containing food of any one of claims 1 to 3, wherein the sugar alcohol is maltitol or hydrogenated isomaltulose.

6. The sweetener mixture-containing food of any one of claims 1 to 3, wherein the cane sugar is at least one selected from the group consisting of granulated sugar, white sugar and brown sugar.

7. The sweetener mixture-containing food of any one of claims 1 to 6 which is selected from the group consisting of adzuki bean jam, Japanese sweets, pastries, creams, jams, snacks, ices, gums and candies, baked goods, premixed flour, instant foods, health foods, soft drink, popular drinks, fish paste products, soups, sauces, pickles, everyday dishes, foods boiled down in soy, pouch-packed foods and frozen foods.

## INTERNATIONAL SEARCH REPORT

| International application No. |
| --- |
| PCT/JP03/15433 |

**A. CLASSIFICATION OF SUBJECT MATTER**
Int.Cl$^7$ A23L1/22

According to International Patent Classification (IPC) or to both national classification and IPC

**B. FIELDS SEARCHED**

Minimum documentation searched (classification system followed by classification symbols)
Int.Cl$^7$ A23L1/22-1/236

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 60-168364 A  (Sekisui Chemical Co., Ltd.), 31 August, 1985 (31.08.85), (Family: none) | 1-7 |
| X | DE 2703396 A  (INDIANA UNIV. FOUND N.), 04 August, 1997 (04.08.97), & GB 1574848 A  & FR 2339345 A & JP 52-96775 A | 1-7 |
| X | JP 49-54572 A  (Kabushiki Kaisha Hayashibara Seibutsu Kagaku Kenkyujo), 27 May, 1974 (27.05.74), (Family: none) | 1-7 |
| Y | EP 39029 B1  (TOWA CHEM. IND. CO., LTD.), 14 July, 1993 (14.07.93), & DE 69002177 E  & JP 2-257848 A | 4,5 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 10 March, 2004 (10.03.04) | Date of mailing of the international search report 30 March, 2004 (30.03.04) |
| --- | --- |
| Name and mailing address of the ISA/ Japanese Patent Office | Authorized officer |
| Facsimile No. | Telephone No. |

Form PCT/ISA/210 (second sheet) (July 1998)